# EUROPEAN PATENT SPECIFICATION

(11) **EP 2 905 949 B1**
(45) Date of publication and mention of the grant of the patent: **03.04.2019**
(21) Application number: 15150206.9
(22) Date of filing: 06.01.2015
(51) Int. Cl.: H04M 1/725, H04M 19/04

(54) **Notification volume adjustment based on distance from paired device**
Benachrichtigungsvolumeneinstellung auf Basis der Entfernung einer gepaarten Vorrichtung
Réglage de volume de notification en fonction de la distance à partir de dispositifs appariés

(30) Priority: 11.02.2014 US 201414178085
(43) Date of publication of application: 12.08.2015
(73) Proprietor: NXP B.V., 5656 AG Eindhoven (NL)
(72) Inventor: Zuidema, Edwin, 5656 AG Eindhoven (NL); Milosevski, Vlatko, 5656 AG Eindhoven (NL)
(74) Representative: Krott, Michel

(56) References cited:
- US-A1- 2005 221 798
- US-A1- 2008 200 123
- US-A1- 2013 324 081
- US-B1- 7 257 374

## Description

### BACKGROUND

With an unprecedented adoption of technologies by the masses, mobile phones and mobile devices have virtually become necessities of life. Recently, gadgets that compliment mobile devices have started to become popular as for example smart watches that connect to mobile devices. With the use of technologies such as Bluetooth, it has become possible to connect various types of external devices to mobile devices such as smart watches, wireless headphones, smart displays, etc. It is no longer necessary to keep a mobile device within the ringtone hearing range if the user of the mobile device is wearing, for example, a smart watch.

These smart companion devices remain in constant communication with the host mobile device. These communication links are typically used for exchanging data and notifications between one or more companion device and a mobile device.

US 2013/0324081 A1 describes systems and methods for varying the functions of an electronic device according to a physical relationship (e.g. the distance) between the electronic device and the primary user (e.g., owner) of the electronic device. The device may measure the distance using a wireless signal from a secondary device carried by or associated with the primary user. In some embodiments, the electronic device may change its functions based on its environment, in combination with the distance between the electronic device and the primary user. Environmental factors may include the device's location, the device's velocity, and the date and time of day.

US 2008/0200123 A1 describes a mobile phone capable of auto-adjusting call alarms, which collocates with a wireless transmission device that is separated from the mobile phone and can be carried by a user. The mobile phone includes a receiving device and a processing unit. The receiving device is used for receiving signals transmitted from the wireless transmission device. The processing unit is coupled to the receiving device for determining a distance between the wireless transmission device and the receiving device and for determining call alarms of the mobile phone according to the distance between the wireless transmission device and the receiving device. The processing unit sets the call alarms of the mobile phone to a preset alarm mode when the processing unit determines that the distance between the wireless transmission device and the receiving device is greater than a predetermined distance.

US 2005/0221798 A1 describes techniques and structures for providing proximity based authentication, security, and/or user notification in a wireless system.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In accordance with a first aspect of the present disclosure, a method for adjusting a sound notification volume of a mobile device is conceived, as defined in claim 1. Furthermore, in accordance with a second aspect of the present disclosure, a non-transitory computer-readable medium for adjusting a sound notification volume of a mobile device is provided, as defined in claim 8. Furthermore, in accordance with a third aspect of the present disclosure, a mobile device is provided, as defined in claim 9. In addition, advantageous embodiments are defined in the dependent claims. It is noted that embodiments described below in the Detailed Description, which are not covered by the claims, represent background art, examples or ways to carry out the invention which are useful for understanding the invention.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
FIG. 1 is an exemplary schematic of a mobile device and a smart companion device in accordance with one or more embodiment;
FIG 2A illustrates a preferred method for adjusting sound notification volume of a mobile device based on distance sensing by the mobile device in accordance with one or more embodiments; and
FIG. 2B illustrates an exemplary method for adjusting sound notification volume of a mobile device based on distance sensing by the companion device in accordance with one or more exemplary embodiments.

### DETAILED DESCRIPTION

Since it is no longer necessary to keep a mobile device within a reasonable ringtone hearing zone while wearing a smart companion device, the issue arises when a communication is received at the mobile device and the mobile device being at some distance away from the user, the user is unable to hear the communication notification sound. The notification sound may be the ringtone when an audio/video call is received by the mobile device or email notification or text message notification or any other sound notification triggered by an application executing in the mobile device. Embodiments of the present invention addresses this issue by adjusting the sound volume of the mobile device based on the distance between the mobile device and the companion device.

Further, often times, a user put a mobile phone on mute, for example, during meetings and then forgets to un-mute the volume. The embodiments of the present invention provides automatic un-muting when the distance between the user (who is wearing a smart companion device) and the mobile device exceeds a preset threshold or the connection with the smart companion device is lost.

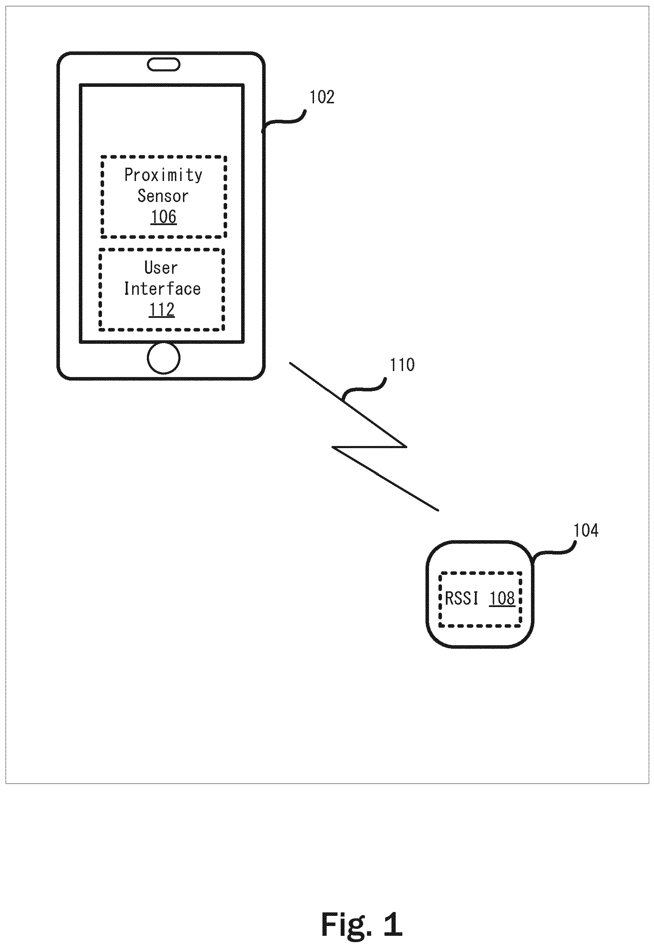

Figure 1 an exemplary schematic of a mobile device 102 and a smart companion device 104. The smart device 104 is connected (typically called "paired") to the mobile device 102 via a wireless communication link 110. The wireless communication link 110 may be a Bluetooth link or a Wi-Fi link. In another embodiment, the smart companion device 104 may not be connected directly to the mobile device 102. Instead, the smart companion device 104 and the mobile device 102 connect to a network device (not shown) and communicate with each other through the network device. In another embodiment, the mobile device 102 and the smart companion device 104 connects to each other directly as shown when there is no network device is available and switches to a communication mode via the network device when the network device becomes available. The example of a network device may be a Wi-Fi router or a mobile communication tower. Switching to or using the network device, when available, may provide battery saving because the mobile device 102 is likely to be connected to either a Wi-Fi router, when available or a mobile data network for communication with external devices such as other users' mobile devices or servers. In these cases, the direct communication link 110 may be shutdown to save battery life. However, in one embodiment, the direct communication link 110 is revived at preset intervals, for a short period of time, for the purpose of sensing the distance between the mobile device 102 and the smart companion device 104.

The mobile device 102, in one embodiment, includes a proximity sensor 106. The proximity sensor 106 may be a software that executes a method to sense the signal strength of the direct communication link 110. If the direct communication link 110 is not active, the proximity sensor 106 revives the direct communication link 110 for a period that is necessary to execute the method.

To save the battery power, the mobile device 102 is equipped with varying the transmit power based on the distance of a connected device, e.g., the smart companion device 104. The signal transmitters that are built into the mobile device 102 to facilitate Bluetooth or Wi-Fi communication vary signal distance based on various criterions including a rate of packet loss. The proximity sensor 106 may include a software module to store pre-calculated data to map a particular signal strength value to the distance to the connected device. Based on the derived distance from the signal strength and a user configuration, the mobile phone 102 is instructed to either increase or reduce sound notification volume or un-mute the volume.

The smart companion device 104 may also include a received signal strength indicator (RSSI) module 108 to measure the signal strength of the received signal via the direct communication link 110. In one embodiment, either the proximity sensor 106, if available, or the RSSI module 108, if available, may measure the distance. In another embodiment, if both the proximity sensor 106 and the RSSI module 108 are available, both of these module may measure the distance and subsequently the two measurements may be combined to have better accuracy of measurement. In one embodiment, the user of the mobile device 102 may configure the uses of the proximity sensor 106 and the RSSI module 108.
In one embodiment, when the distance to the smart companion device 104 is beyond a second threshold or when the smart companion device 104 is unreachable, the sound notification volume is set to the maximum value. Alternatively, depending upon a user configuration, the sound notification volume is muted when the distance is beyond the second threshold value or when the smart companion device 104 is unreachable. In yet another embodiment, this such conditions, the sound notification volume is set be changed manually by the user of the mobile device 102.

A user interface 112 is provided to enable the user of the mobile device 102 to configure various settings as described herein. For example, the user interface 112 may allow the user to set various threshold distances, turn on or off the method to automatically adjust the sound notification volume based on the distance from the smart companion device 104, set "out of range" behavior. In another embodiment, the granularity of the sound notification volume adjustment may also be configured via the user interface. For example, the user may configure ranges of distances in which the sound notification volume may not be automatically adjusted, as for example, keep the sound notification volume at a preset value between 0.6096 meters and 1.2192 meters (i.e. between 2 feet to 4 feet). In one embodiment, for example in Android based mobile devices, the user interface may be provided in sound settings section of the mobile device 102. In one embodiment, the user interface is only available when at the smart companion device 104 is connected or paired with the mobile device 102. It should be noted that a person of ordinary skills in the art would appreciated that several other similar settings may be provided without deviating from embodiments described herein.

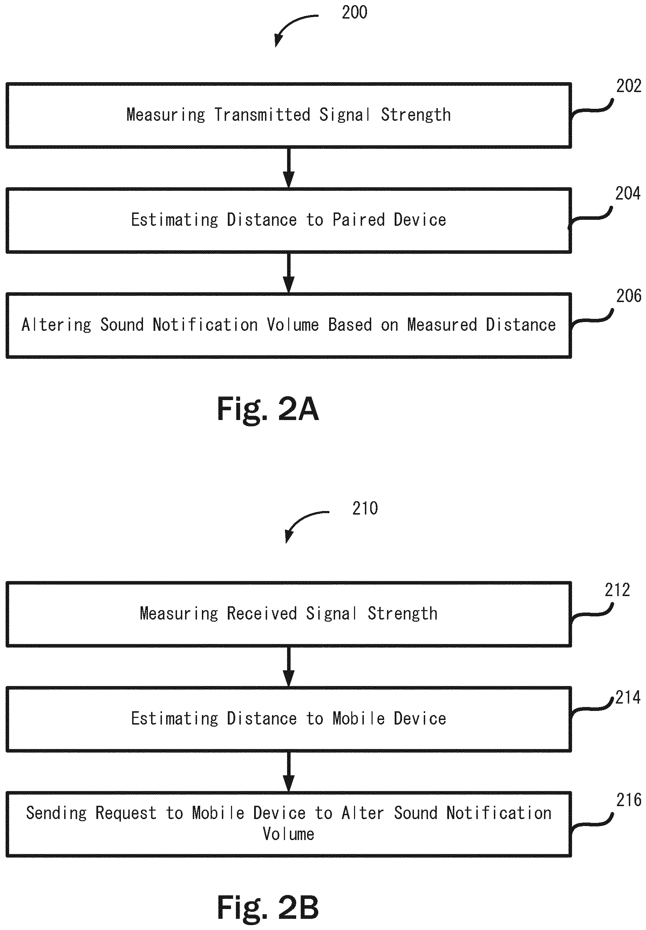

Figure 2A illustrates a preferred method 200 for adjusting sound notification volume of a mobile device 102 based on distance sensing by the mobile device 102. Accordingly, at step 202, the proximity sensor 106, with the help of the signal transmitter of the mobile device 102, measures the transmit signal strength. Subsequently, at step 204, the proximity sensor 106 (or a separate software module in another embodiment) calculates the distance between the mobile device 102 and the smart companion device 104 based on the transmit signal strength and the calibration data stored in the mobile phone 102. The calibration data maps the signal strength to the distance of the receiving device, e.g., the smart companion device 106. In one exemplary embodiment, the calibration data may be updated from a server (not shown) via the Internet. Alternatively, in some embodiment, the calibration data may be manually inputted. At step 206, the sound notification volume is adjusted or altered based on preset configuration and the measured distance. Other operations may also be performed based on user configuration as set by the mobile device manufacturer or the user of the mobile device 102. The examples of these other operations may be muting/unmuting the sound notifications or setting the granularity of sound notification adjustments, etc.

Figure 2B, illustrates an exemplary method 210 for adjusting sound notification volume of a mobile device 102 based on distance sensing by the smart companion device 104. Accordingly, at step 212, the smart companion device 104 measures the received signal strength using the RSSI module 108. At step 214, the smart companion device 104 estimates the distance to the mobile device 102 based on the measured received signal strength. Alternatively, the smart companion device 104 may send the measured received signal strength to the mobile device 102 for further calculations according to the method 200 using a calibration data for the received signal strength.

When the distance calculations are performed at the smart companion device 104, at step 216, the smart companion device 104 sends a request to the mobile device 102 to adjust the sound notification volume according to the measured distance.

It should be noted that even though the disclosure uses a mobile phone and smart companion device to explain various embodiments, a person of ordinary skills will realize that the embodiments described herein may also be used in other applications that require a distance based altering of properties of a mobile device.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein, including the best mode known to the inventor for carrying out the claimed subject matter. Of course, variations of those preferred embodiments will become apparent to those of ordinary skill in the art upon reading the foregoing description.

## Claims

1. A method for adjusting a sound notification volume of a mobile device (102), comprising:
- using a configuration that is preset in the mobile device (102) and an estimated distance between the mobile device (102) and a companion device (104) that is paired with the mobile device (102), for adjusting the sound notification volume of the mobile device (102);
**characterized in that** said distance is estimated by:
- measuring, at the mobile device (102), a transmission signal strength of a signal transmitted from the mobile device (102) to the companion device (104) via a wireless communication link between the mobile device (102) and the companion device (104), wherein the wireless communication link is configured to provide bidirectional communication between the mobile device (102) and the companion device (104); and
- using a calibration data and the measured transmission signal strength, wherein the calibration data is stored in the mobile device (102) and provides a mapping between different values of the measured transmission signal strength and distances of the mobile device (102) to the companion device (104), for estimating said distance.

2. The method of claim 1, wherein the measuring of the transmission signal strength is performed using a signal transmitter module of the mobile device (102).

3. The method of claim 1, wherein the calibration data is prepared for the mobile device (102) by a user of the mobile device (102).

4. The method of claim 1, wherein the calibration data is prepared for the mobile device (102) by a manufacturer of the mobile device (102).

5. The method of any preceding claim, wherein the configuration includes a distance threshold, the distance threshold defines a user selected operation that is performed when the distance between the mobile device (102) and the companion device (104) exceeds the distance threshold.

6. The method of claim 5, wherein the distance threshold is configurable by a user of the mobile device (102) through settings of the mobile device (102).

7. The method of any preceding claim, wherein the configuration includes an operation that is performed when the companion device (104) is unreachable or turned off.

8. A non-transitory computer-readable medium for adjusting a sound notification volume of a mobile device (102), embodied in the mobile device (102), the computer-readable medium including programming instructions, which when executed by a processor of the mobile device (102) perform the method of any preceding claim.

9. A mobile device (102), comprising:
- means for adjusting the sound notification volume of the mobile device (102) using a configuration that is preset in the mobile device (102) and an estimated distance between the mobile device (102) and a companion device (104) that is paired with the mobile device (102);
**characterized in that** the mobile device (102) further comprises:
- means for measuring, at the mobile device (102), a transmission signal strength of a signal transmitted from the mobile device (102) to the companion device (104) via a wireless communication link between the mobile device (102) and the companion device (104), wherein the wireless communication link is configured to provide bidirectional communication between the mobile device (102) and the companion device (104); and
- means for estimating said distance using a calibration data and the measured transmission signal strength, wherein the calibration data is stored in the mobile device (102) and provides a mapping between different values of the measured transmission signal strength and distances of the mobile device (102) to the companion device (104).

10. The mobile device of claim 9, wherein the calibration data is prepared for the mobile device (102) by a manufacturer of the mobile device (102).

11. The mobile device (102) of claim 9 or 10, wherein the configuration includes a distance threshold, the distance threshold defines a user selected operation that is performed when the distance between the mobile device (102) and the companion device (104) exceeds the distance threshold.

## Patentansprüche

1. Ein Verfahren zum Justieren einer Tonbenachrichtigungslautstärke eines mobilen Gerätes (102), das Verfahren aufweisend:
- Verwenden einer Konfiguration, die in dem mobilen Gerät (102) voreingestellt ist, und eines geschätzten Abstandes zwischen dem mobilen Gerät (102) und einem Begleitgerät (104), welches mit dem mobilen Gerät (102) gepaart ist, zum Justieren der Tonbenachrichtigungslautstärke des mobilen Gerätes (102);
**dadurch gekennzeichnet, dass** der besagte Abstand durch Folgendes geschätzt wird:
- Messen, bei dem mobilen Gerät (102), einer Sendesignalstärke eines Signals, das von dem mobilen Gerät (102) zu dem Begleitgerät (104) über einen drahtlosen Kommunikationslink zwischen dem mobilen Gerät (102) und dem Begleitgerät (104) gesendet wird, wobei der drahtlose Kommunikationslink dazu konfiguriert ist, bidirektionale Kommunikation zwischen dem mobilen Gerät (102) und dem Begleitgerät (104) bereitzustellen; und
- Verwenden von Kalibrierungsdaten und der gemessenen Sendesignalstärke, wobei die Kalibrierungsdaten in dem mobilen Gerät (102) gespeichert sind und ein Mapping zwischen verschiedenen Werten der gemessenen Sendesignalstärke und Abständen von dem mobilen Gerät (102) zu dem Begleitgerät (104) bereitstellt, um den besagten Abstand zu schätzen.

2. Das Verfahren gemäß Anspruch 1, wobei das Messen der Sendesignalstärke unter Verwendung eines Signaltransmittermoduls des mobilen Gerätes (102) durchgeführt wird.

3. Das Verfahren gemäß Anspruch 1, wobei die Kalibrierungsdaten für das mobile Gerät (102) durch einen Benutzer des mobilen Gerätes (102) vorbereitet wurden.

4. Das Verfahren gemäß Anspruch 1, wobei die Kalibrierungsdaten für das mobile Gerät (102) durch einen Hersteller des mobilen Gerätes (102) vorbereitet wurden.

5. Das Verfahren gemäß einem jeden vorhergehenden Anspruch, wobei die Konfiguration einen Abstands Schwellenwert aufweist, wobei der Abstands Schwellenwert einen von einem Benutzer ausgewählten Vorgang aufweist, der durchgeführt wird, wenn der Abstand zwischen dem mobilen Gerät (102) und dem Begleitgerät (104) den Abstandsschwellenwert überschreitet.

6. Das Verfahren gemäß Anspruch 5, wobei der Abstandsschwellenwert von einem Benutzer des mobilen Gerätes (102) durch Einstellungen des mobilen Gerätes (102) konfigurierbar ist.

7. Das Verfahren gemäß einem jeden vorhergehenden Anspruch, wobei die Konfiguration einen Vorgang aufweist, der durchgeführt wird, wenn das Begleitgerät (104) nicht erreichbar oder ausgeschaltet ist.

8. Ein nicht flüchtiges computerlesbares Medium zum Justieren einer Tonbenachrichtigungslautstärke eines mobilen Gerätes (102), welches Medium in dem mobilen Gerät (102) verkörpert ist, wobei das computerlesbare Medium Programmbefehle aufweist, welche, wenn sie von einem Prozessor des mobilen Gerätes (102) ausgeführt werden, das Verfahren gemäß einem jeden der vorhergehenden Ansprüche durchführt.

9. Ein mobiles Gerät (102), aufweisend:
- ein Mittel zum Justieren der Tonbenachrichtigungslautstärke des mobilen Gerätes (102) unter Verwendung einer Konfiguration, die in dem mobilen Gerät (102) voreingestellt ist, und eines geschätzten Abstandes zwischen dem mobilen Gerät (102) und einem Begleitgerät (104), welches mit dem mobilen Gerät (102) gepaart ist;
**dadurch gekennzeichnet, dass** das mobile Gerät (102) ferner aufweist:
- ein Mittel zum Messen, bei dem mobilen Gerät (102), einer Sendesignalstärke eines Signals, das von dem mobilen Gerät (102) zu dem Begleitgerät (104) über einen drahtlosen Kommunikationslink zwischen dem mobilen Gerät (102) und dem Begleitgerät (104) gesendet wird, wobei der drahtlose Kommunikationslink dazu konfiguriert ist, bidirektionale Kommunikation zwischen dem mobilen Gerät (102) und dem Begleitgerät (104) bereitzustellen; und
- ein Mittel zum Schätzen des besagten Abstandes unter Verwendung von Kalibrierungsdaten und der gemessenen Sendesignalstärke, wobei die Kalibrierungsdaten in dem mobilen Gerät (102) gespeichert sind und ein Mapping zwischen verschiedenen Werten der gemessenen Sendesignalstärke und Abständen von dem mobilen Gerät (102) zu dem Begleitgerät (104) bereitstellt.

10. Das mobile Gerät gemäß Anspruch 9, wobei die Kalibrierungsdaten für das mobile Gerät (102) durch einen Hersteller des mobilen Gerätes (102) vorbereitet wurden.

11. Das mobile Gerät (102) gemäß Anspruch 9 oder 10, wobei die Konfiguration einen Abstandsschwellenwert aufweist, wobei der Abstandsschwellenwert einen von einem Benutzer ausgewählten Vorgang aufweist, der durchgeführt wird, wenn der Abstand zwischen dem mobilen Gerät (102) und dem Begleitgerät (104) den Abstandsschwellenwert überschreitet.

## Revendications

1. Procédé pour ajuster un volume de notification sonore d'un dispositif mobile (102), comprenant :
d'utiliser une configuration qui est prédéfinie dans le dispositif mobile (102) et une distance estimée entre le dispositif mobile (102) et un dispositif accompagnateur (104) qui est apparié au dispositif mobile (102), pour ajuster le volume de notification sonore du dispositif mobile (102) ;
**caractérisé en ce que** ladite distance est estimée :
- en mesurant, au niveau du dispositif mobile (102), l'intensité d'un signal de transmission d'un signal transmis du dispositif mobile (102) au dispositif accompagnateur (104) par l'intermédiaire d'une liaison de communication sans fil entre le dispositif mobile (102) et le dispositif accompagnateur (104), où la liaison de communication sans fil est configurée pour assurer une communication bidirectionnelle entre le dispositif mobile (102) et le dispositif accompagnateur (104) ; et
- en utilisant des données d'étalonnage et l'intensité mesurée du signal de transmission, les données d'étalonnage étant stockées dans le dispositif mobile (102) et fournissant une correspondance entre différentes valeurs de l'intensité mesurée du signal de transmission et des distances entre le dispositif mobile (102) et le dispositif accompagnateur (104), pour estimer ladite distance.

2. Procédé selon la revendication 1, dans lequel la mesure de l'intensité du signal de transmission est effectuée à l'aide d'un module émetteur de signaux du dispositif mobile (102).

3. Procédé selon la revendication 1, dans lequel les données d'étalonnage sont préparées pour le dispositif mobile (102) par un utilisateur du dispositif mobile (102) .

4. Procédé selon la revendication 1, dans lequel les données d'étalonnage sont préparées pour le dispositif mobile (102) par un fabricant du dispositif mobile (102).

5. Procédé selon l'une quelconque des revendications précédentes, dans lequel la configuration comprend un seuil de distance, le seuil de distance définissant une opération sélectionnée par l'utilisateur qui est exécutée lorsque la distance entre le dispositif mobile (102) et le dispositif accompagnateur (104) dépasse le seuil de distance.

6. Procédé selon la revendication 5, dans lequel le seuil de distance peut être configuré par un utilisateur du dispositif mobile (102) par l'intermédiaire de réglages du dispositif mobile (102).

7. Procédé selon l'une quelconque des revendications précédentes, dans lequel la configuration comprend une opération qui est exécutée lorsque le dispositif accompagnateur (104) est inaccessible ou désactivé.

8. Support non transitoire lisible par ordinateur pour ajuster un volume de notification sonore d'un dispositif mobile (102), incorporé dans le dispositif mobile (102), le support lisible par ordinateur comprenant des instructions de programmation, qui, lorsqu'elles sont exécutées par un processeur du dispositif mobile (102), exécutent le procédé de l'une quelconque des revendications précédentes.

9. Dispositif mobile (102), comprenant :
- des moyens pour ajuster le volume de notification sonore du dispositif mobile (102) en utilisant une configuration qui est prédéfinie dans le dispositif mobile (102) et une distance estimée entre le dispositif mobile (102) et un dispositif accompagnateur (104) qui est apparié au dispositif mobile (102) ;
**caractérisé en ce que** le dispositif mobile (102) comprend en outre :
- des moyens pour mesurer, au niveau du dispositif mobile (102), l'intensité d'un signal de transmission d'un signal transmis du dispositif mobile (102) au dispositif accompagnateur (104) par l'intermédiaire d'une liaison de communication sans fil entre le dispositif mobile (102) et le dispositif accompagnateur (104), où la liaison de communication sans fil est configurée pour assurer une communication bidirectionnelle entre le dispositif mobile (102) et le dispositif accompagnateur (104) ; et
- des moyens pour estimer ladite distance en utilisant des données d'étalonnage et l'intensité mesurée du signal de transmission, où les données d'étalonnage sont stockées dans le dispositif mobile (102) et fournissent une correspondance entre différentes valeurs de l'intensité mesurée du signal de transmission et des distances entre le dispositif mobile (102) et le dispositif accompagnateur (104).

10. Dispositif mobile selon la revendication 9, dans lequel les données d'étalonnage sont préparées pour le dispositif mobile (102) par un fabricant du dispositif mobile (102).

11. Dispositif mobile (102) selon la revendication 9 ou la revendication 10, dans lequel la configuration comprend un seuil de distance, le seuil de distance définissant une opération sélectionnée par l'utilisateur qui est exécutée lorsque la distance entre le dispositif mobile (102) et le dispositif accompagnateur (104) dépasse le seuil de distance.
